# FASCICULE DE BREVET EUROPEEN

(11) **EP 2 063 154 B1**
(45) Date de publication et mention de la délivrance du brevet: **17.03.2010**
(21) Numéro de dépôt: 08168123.1
(22) Date de dépôt: 31.10.2008
(51) Int. Cl.: F16H 63/30, F16H 63/34

(54) **Dispositif de commande interne de boîte de vitesses d'un véhicule automobile**
Interne Steuervorrichtung des Getriebes eines Kraftfahrzeugs
Device for internally controlling the gearbox of an automobile

(30) Priorité: 20.11.2007 FR 0759167
(43) Date de publication de la demande: 27.05.2009
(73) Titulaire: Peugeot Citroën Automobiles SA, 78140 Vélizy-Villacoublay (FR)
(72) Inventeur: Ploe, Pierre, 92800, Puteaux (FR)

(56) Documents cités:
- EP-A- 0 745 790
- GB-A- 1 409 228
- JP-A- 59 194 135
- US-A- 4 510 818
- US-A- 4 785 681

## Description

La présente invention concerne un dispositif de commande interne de boîte de vitesses pour l'engagement des rapports de vitesse, sur une boîte de vitesses à arbres parallèles d'un véhicule automobile.

Les boîtes de vitesses manuelles des véhicules automobiles, comportent un premier arbre lié au moteur du véhicule par un embrayage, et un deuxième arbre parallèle récepteur, lié aux roues motrices du véhicule. Ces arbres peuvent être reliés entre eux par des couples de pignons formant un engrenage, transmettant le mouvement de l'un à l'autre suivant différents rapports de démultiplication, correspondant respectivement à autant de rapports de vitesse.

Un des pignons de chaque engrenage est solidaire d'un des arbres, l'autre pignon de l'engrenage monté libre en rotation sur l'autre arbre, peut être rendu solidaire de son arbre par le coulissement axial d'un manchon de synchronisation. Ce coulissement réalise d'abord une synchronisation des vitesses des deux éléments par un dispositif de synchronisation comportant des cônes de frottement, puis un crabotage assurant la solidarisation du pignon sur l'arbre.

Chaque manchon de synchronisation peut commander l'engagement d'un rapport disposé axialement d'un côté, ou de deux rapports disposés des deux côtés du manchon.

Pour l'engagement d'un rapport de marche arrière réalisant une inversion du sens de marche de l'arbre récepteur, une disposition connue comporte un arbre intermédiaire supportant un pignon baladeur monté libre en rotation, qui peut être engagé par coulissement axial simultanément sur un pignon lié à l'arbre moteur, et sur un autre pignon lié à l'arbre récepteur.

Le pignon baladeur comporte des dentures droites comprenant des faces avant en forme de pointe, pour faciliter l'engagement des dents avec celles des deux autres pignons. Ce dispositif est simple et économique. De plus il est compact, et permet de réduire la longueur de la boîte de vitesses en comparaison avec une boîte comprenant un synchroniseur dédié pour la marche arrière.

Toutefois, il nécessite un moyen de freinage de l'arbre moteur pour, dans le cas où celui-ci serait entraîné par sa propre inertie ou par un couple résiduel appliqué sur le disque d'embrayage, le freiner et obtenir une différence de vitesse suffisamment réduite permettant l'engagement des dents du pignon baladeur sans choc, et en évitant donc de générer des bruits et de l'usure.

Un dispositif de freinage de l'arbre moteur est décrit notamment dans le document US 4510818 A. Il présente un levier de commande d'un rapport de marche arrière, comportant un doigt de passage qui s'engage dans une rainure d'un premier moyen d'entraînement pour le passage des rapports, formant une plaque appelée aussi noix d'entraînement, pour la faire coulisser axialement et engager la marche arrière.

La première partie de la course d'engagement agit aussi sur une deuxième noix d'entraînement formant une plaque disposée parallèlement à la première noix, liée à une fourchette de commande d'un manchon d'engagement du quatrième rapport de marche avant, pour commencer à activer son synchroniseur. De cette manière, le véhicule étant quasiment à l'arrêt, ce synchroniseur freine l'arbre moteur.

Le doigt de passage est latéralement aligné sur les rainures des différentes noix d'entraînement qui sont superposées, pour sélectionner une des fourchettes. Une clé d'interverrouillage comporte des pavés de blocage qui après la sélection d'une des noix d'entraînement, empêchent un mouvement accidentel des autres noix par un mouvement du doigt de passage qui serait mal positionné transversalement, pour éviter un passage simultané de deux rapports.

Toutefois, la noix d'entraînement de la fourchette de commande des troisième et quatrième rapports, comporte une découpe qui permet un petit mouvement de cette fourchette malgré le pavé de blocage de la clé d'interverrouillage, pour permettre un freinage de l'arbre moteur par le début d'engagement du quatrième rapport.

Un inconvénient principal de ce dispositif est qu'il peut permettre aussi, lors de l'engagement d'autres rapports comme le deuxième, dans le cas d'un mauvais positionnement du doigt de passage, un déplacement non voulu de la fourchette du quatrième rapport.

La présente invention a notamment pour but d'éviter ces inconvénients de la technique antérieure, et de proposer un dispositif de commande de marche arrière comportant un freinage de l'arbre moteur, qui permette de manière simple, d'empêcher des mouvements indésirables de fourchettes de commande.

Elle propose à cet effet, un dispositif de commande interne d'une boîte de vitesses d'un véhicule, notamment d'un véhicule automobile, comportant un doigt de passage se déplaçant transversalement dans des rainures de noix d'entraînement de fourchettes de commande, pour sélectionner une fourchette et la faire coulisser axialement, une clé d'interverrouillage comportant des pavés de blocage ajustés dans ces rainures et encadrant le doigt de passage, empêchant un coulissement axial d'une autre fourchette, cette boîte de vitesses comportant de plus un rapport de marche arrière mis en oeuvre par le déplacement d'un pignon baladeur, l'engagement de la marche arrière s'accompagnant d'un mouvement de synchronisation d'un rapport de marche avant pour freiner l'arbre moteur de la boîte de vitesses, caractérisé en ce que la noix d'entraînement de ce rapport de marche avant comporte une forme en crochet sur un côté de sa rainure, la pointe de ce crochet venant pénétrer dans un creux d'un pavé de blocage, lors de la synchronisation par le rapport de marche avant.

Un avantage du dispositif selon l'invention est que, après sélection de la marche arrière, la forme en crochet de la noix d'entraînement pour le rapport de marche avant peut, en pénétrant dans le creux du pavé de la clé d'interverrouillage, permettre un mouvement de la noix de ce rapport, alors que pour une autre sélection, ce même crochet venant buter sur le pavé de blocage en dehors du creux, ne pourra se déplacer.

Le dispositif selon l'invention peut en outre comporter une ou plusieurs des caractéristiques suivantes, qui peuvent être combinées entre elles.

Avantageusement, le creux comporte une ouverture sensiblement rectangulaire dans laquelle vient s'ajuster la pointe du crochet.

Avantageusement, le crochet est formé par la découpe d'une tôle constituant la noix d'entraînement du rapport de marche avant.

Selon une caractéristique de l'invention, le dispositif comporte de plus un doigt d'entraînement lié au doigt de passage des vitesses, et un cliquet lié à la noix d'entraînement du rapport de marche avant, le doigt d'entraînement étant apte à actionner le cliquet pour freiner l'arbre moteur.

Selon une disposition particulière, le dispositif comporte quatre noix d'entraînement comprenant des plaques superposées, la première noix étant liée à une fourchette de commande du premier et du deuxième rapport, la deuxième noix étant liée à une fourchette de commande du troisième et du quatrième rapport, la troisième noix étant liée à une fourchette de commande d'un cinquième rapport, et la quatrième noix actionnant un dispositif de passage de la marche arrière.

Le dispositif de synchronisation du quatrième rapport peut être utilisé pour freiner l'arbre moteur.

Selon une autre disposition particulière, le doigt de passage a un mouvement de coulissement pour réaliser une sélection, et un mouvement de rotation pour réaliser un passage.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 présente en perspective, une commande interne d'une boîte de vitesses selon l'invention ;
- la figure 2 présente une vue de détail des noix d'entraînement ;
- la figure 3 présente la clé d'interverrouillage en position de point mort ;
- la figure 4 présente une vue de détail de la clé d'interverrouillage ;
- la figure 5 présente une vue de détail de la noix d'entraînement de la fourchette des troisième et quatrième rapports ; et
- la figure 6 présente la clé d'interverrouillage en position de sélection de la marche arrière.

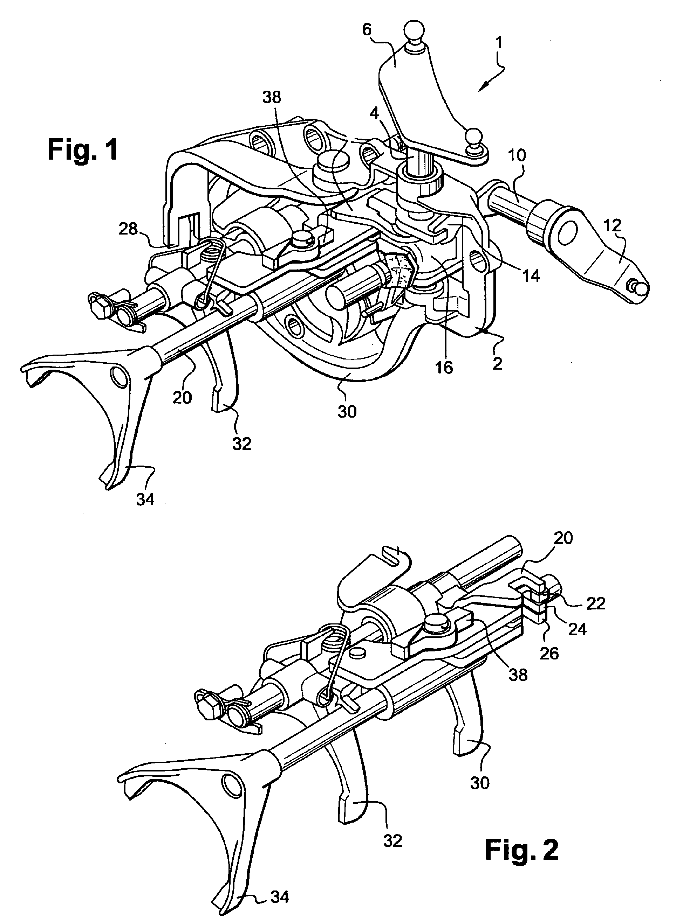

La figure 1 présente un dispositif de commande interne 1 d'une boîte de vitesses selon l'invention, comprenant un premier arbre moteur non représenté, lié au moteur du véhicule par un embrayage, et un deuxième arbre récepteur non représenté, disposé parallèlement. L'arbre moteur supporte des pignons fixes engrenant avec des pignons libres de l'arbre récepteur, qui peuvent être engagés par des manchons de synchronisation pour réaliser différents rapports de vitesse.

Un support 2 fixé à l'intérieur du carter de la boîte de vitesses, supporte l'ensemble du dispositif de commande interne. Un axe de passage 4 disposé verticalement, reçoit à son extrémité supérieure sortant de la boîte de vitesses, un bras de commande 6 comportant une rotule reliée au mouvement de passage du levier de changement de vitesses, actionné par le conducteur.

Pour la description de l'ensemble des figures, l'axe de passage 4 est considéré comme étant toujours disposé verticalement suivant la représentation de la figure 1, alors que dans le véhicule il pourrait avoir une autre inclinaison.

Un axe de sélection 10 disposé horizontalement, reçoit à son extrémité extérieure sortant de la boîte de vitesses, un bras de commande 12 comportant une rotule reliée au mouvement de sélection du lévier de changement-de vitesses, et à son extrémité intérieure, un bras de sélection 14 faisant coulisser verticalement une clé d'interverrouillage 16, qui contient un doigt de passage 60 lié en rotation à l'axe de passage 4.

Le doigt de passage est ainsi mis successivement à la hauteur de moyens d'entraînement superposés de différents axes de fourchettes, appelés noix de fourchettes, et comportant des rainures recevant ce doigt. La clé d'interverrouillage 16 comporte des pavés de blocage se déplaçant dans ces rainures, qui empêchent un mouvement accidentel des autres noix d'entraînement.

Le dispositif 1 comporte, de plus, un basculeur 28 formant un bras qui pivote, pour entraîner un pignon baladeur de marche arrière, calé axialement dans une rainure située à l'extrémité de ce bras.

La figure 2 présente les noix d'entraînement constituant des plaques superposées, entraînant axialement des fourchettes supportées par des axes, qui déplacent des manchons de synchronisation non représentés. En partant du dessus, une première noix 20 entraîne la fourchette 30 de passage des premier et deuxième rapports, une deuxième noix 22 entraîne la fourchette 32 de passage des troisième et quatrième rapports, une troisième noix 24 entraîne la fourchette 34 de passage du cinquième rapport, et une quatrième noix 26 entraîne le basculeur 28 de passage de la marche arrière.

En position de point mort, les rainures des différentes noix d'entraînement sont alignées, le doigt de passage 60 peut librement se déplacer transversalement dans ces rainures.

Un cliquet 38 de frein de marche arrière est supporté par la deuxième noix d'entraînement 22, de commande des passages des troisième et quatrième rapports.

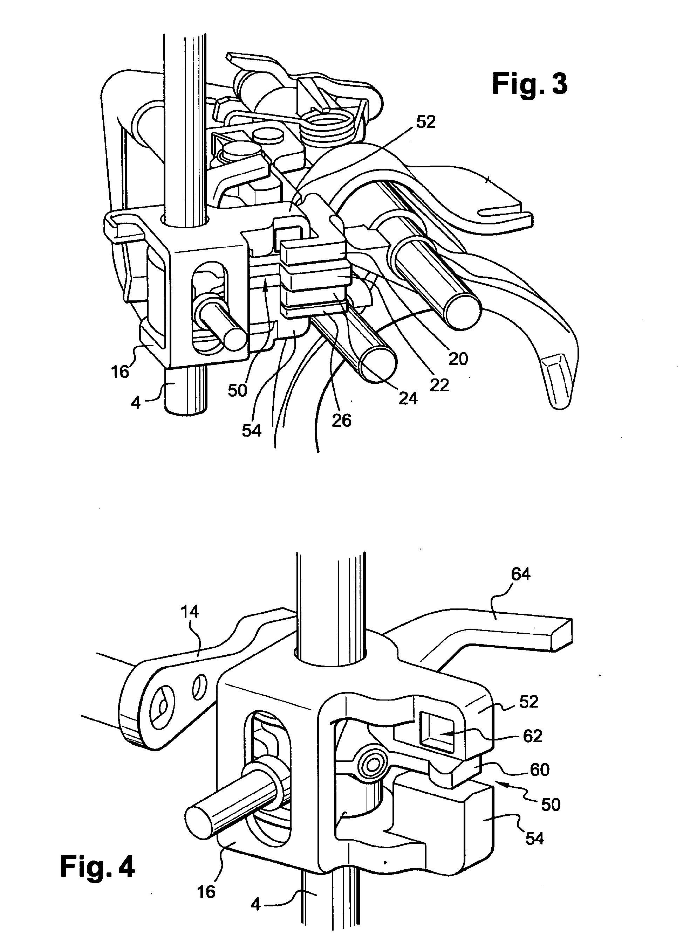

La figure 3 présente la clé d'interverrouillage 16 contenant le doigt de passage 60, cet ensemble supporté par l'axe de passage 4, pouvant coulisser verticalement pour effectuer une sélection. Dans la position de point mort présentée, un dispositif de rappel à ressort positionne le doigt de passage pour une sélection de la deuxième noix d'entraînement 22, commandant le passage des troisième et quatrième rapports.

La clé d'interverrouillage 16 comporte deux pavés de blocage verticalement alignés, et ajustés dans les rainures des noix d'entraînement, un pavé supérieur 52 et un pavé inférieur 54 qui encadrent une fente 50 parallèle aux plans des noix d'entraînement. Le doigt de passage 60 ajusté dans cette fente 50, et entraîné en rotation par l'axe de passage 4, pivote pour faire coulisser la noix d'entraînement sélectionnée, les autres noix étant maintenues en place par les deux pavés 52, 54 ajustés dans leur rainure.

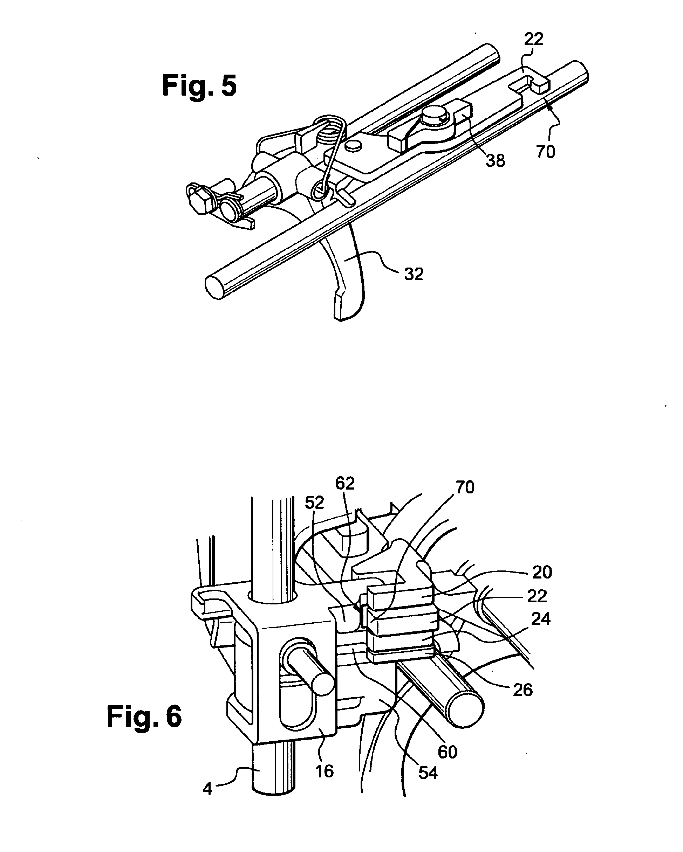

Les figures 4 et 6 présentent la clé d'interverrouillage 16 comprenant sur son pavé supérieur 52, un creux 62 comportant une ouverture sensiblement rectangulaire. Lorsque la clé d'interverrouillage 16 est en position de sélection de la marche arrière, le creux 62 est aligné sur la deuxième noix d'entraînement 22 des troisième et quatrième rapports. Il se trouve face à la pointe dirigée axialement, d'un crochet 70 qui est formé sur un côté de la rainure de cette deuxième noix d'entraînement 22.

Le doigt de passage 60 supporte de plus un doigt d'entraînement 64 actionnant le cliquet 38 de frein de marche arrière, qui déplace la deuxième noix d'entraînement 22 au début de l'engagement de la marche arrière, pour commencer une synchronisation du quatrième rapport et freiner l'arbre moteur.

Comme présenté à la figure 6, lors de ce mouvement de synchronisation du quatrième rapport, la deuxième noix d'entraînement 22 peut coulisser axialement malgré les pavés de blocage de la clé d'interverrouillage 16, car la pointe du crochet 70 pénètre axialement dans le creux 62 du pavé supérieur 52, et permet un petit mouvement axial.

Dans les autres positions de sélection, en dehors d'une sélection de la deuxième noix d'entraînement 22 pour engager le troisième ou le quatrième rapport, l'ouverture du creux 62 rectangulaire étant sensiblement ajustée sur la section de la pointe du crochet 70, un mouvement de cette noix est interdit par cette pointe de crochet qui vient buter sur la face extérieure d'un des pavés de blocage 52, 54.

Avantageusement, le crochet 70 est formé par une découpe d'une tôle formant la plaque de la deuxième noix d'entraînement 22, ce qui constitue un moyen économique. Dans ce cas, la section de la pointe est sensiblement rectangulaire.

On réalise ainsi de manière simple et efficace, un dispositif qui permet un mouvement de synchronisation d'un des rapports de marche avant, seulement quand la marche arrière est sélectionnée.

D'une manière générale et dans le cadre de l'invention, on peut inverser des structures de la commande de la boîte de vitesses, par exemple en utilisant une rotation du doigt de passage pour la sélection, et un coulissement pour le passage.

L'invention ne se limite pas à une boîte de vitesses à cinq rapports, cette boîte pourrait comprendre un nombre de rapport différent.

## Revendications

1. Dispositif de commande interne d'une boîte de vitesses d'un véhicule, notamment d'un véhicule automobile, comportant un doigt de passage (60) se déplaçant transversalement dans des rainures de noix d'entraînement de fourchettes de commande, pour sélectionner une fourchette et la faire coulisser axialement, une clé d'interverrouillage (16) comportant des pavés de blocage (52, 54) ajustés dans ces rainures et encadrant le doigt de passage, empêchant un coulissement axial d'une autre fourchette, cette boîte de vitesses comportant de plus un rapport de marche arrière mis en oeuvre par le déplacement d'un pignon baladeur, l'engagement de la marche arrière s'accompagnant d'un mouvement de synchronisation d'un rapport de marche avant pour freiner l'arbre moteur de la boîte de vitesses, **caractérisé en ce que** la noix d'entraînement (22) de ce rapport de marche avant comporte une forme en crochet (70) sur un côté de sa rainure, la pointe de ce crochet venant pénétrer dans un creux (62) d'un pavé de blocage (52), lors de la synchronisation par le rapport de marche avant.

2. Dispositif suivant la revendication 1, **caractérisé en ce que** le creux (62) comporte une ouverture sensiblement rectangulaire, dans laquelle vient s'ajuster la pointe du crochet (70).

3. Dispositif suivant la revendication 2, **caractérisé en ce que** le crochet (70) est formé par la découpe d'une tôle constituant la noix d'entraînement (22) du rapport de marche avant.

4. Dispositif suivant l'une quelconque des revendications précédentes, **caractérisé en ce qu'**il comporte, en outre, un doigt d'entraînement (64) lié au doigt de passage (60) des vitesses, et un cliquet (38) lié à la noix d'entraînement (22) du rapport de marche avant, le doigt d'entraînement (64) étant apte à actionner le cliquet (38) pour freiner l'arbre moteur.

5. Dispositif suivant l'une quelconque des revendication précédentes, **caractérisé en ce qu'**il comporte quatre noix d'entraînement comprenant des plaques superposées, la première noix (20) étant liée à une fourchette de commande (30) du premier et du deuxième rapport, la deuxième noix (22) étant liée à une fourchette de commande (32) du troisième et du quatrième rapport, la troisième noix (24) étant liée à une fourchette de commande (34) d'un cinquième rapport, et la quatrième noix (26) actionnant un dispositif de passage de la marche arrière (28).

6. Dispositif suivant la revendication 5, **caractérisé en ce que** le dispositif de synchronisation du quatrième rapport est utilisé pour freiner l'arbre moteur.

7. Dispositif suivant l'une quelconque des revendication précédentes, **caractérisé en ce que** le doigt de passage a un mouvement de coulissement pour réaliser une sélection, et un mouvement de rotation pour réaliser un passage.

## Claims

1. Device for internally controlling a gearbox of a vehicle, in particular of an automobile, comprising a gear changing pin (60) moving transversely in grooves of entrainment yokes of control forks to select a fork and to cause it to slide axially, an interlocking key (16) comprising blocks (52, 54) fitted in these grooves and surrounding the gear changing pin, preventing an axial sliding of another fork, this gearbox comprising in addition a reverse gear implemented by the displacement of a sliding gear, the engagement of the reverse gear being accompanied by a synchronisation movement of a forward gear to brake the drive shaft of the gearbox, **characterized in that** the entrainment yoke (22) of this forward gear comprises a hook shape (70) on one side of its groove, the point of this hook coming to penetrate in a depression (62) of a block (52), on synchronisation by the forward gear.

2. Device according to Claim 1, **characterized in that** the depression (62) comprises a substantially rectangular opening in which the point of the hook (70) comes to fit.

3. Device according to Claim 2, **characterized in that** the hook (70) is formed by the cut-out of a sheet constituting the entrainment yoke (22) of the forward gear.

4. Device according to any of the preceding claims, **characterized in that** it comprises, in addition, an entrainment pin (64) linked to the gear changing pin (60), and a catch (38) linked to the entrainment yoke (22) of the forward gear, the entrainment pin (64) being suited to actuate the catch (38) to brake the drive shaft.

5. Device according to any of the preceding claims, **characterized in that** it comprises four entrainment yokes comprising superimposed plates, the first yoke (20) being linked to a control fork (30) of the first and of the second gear, the second fork (22) being linked to a control fork (32) of the third and fourth gear, the third yoke (24) being linked to a control fork (34) of a fifth year, and the fourth yoke (26) actuating a reverse gear changing device (28).

6. Device according to Claim 5, **characterized in that** the synchronisation device of the fourth gear is used to brake the drive shaft.

7. Device according to any of the preceding claims, **characterized in that** the gear changing pin has a sliding movement to carry out a selection, and a rotational movement to carry out a gear change.

## Patentansprüche

1. Interne Steuervorrichtung eines Schaltgetriebes eines Fahrzeugs, insbesondere eines Kraftfahrzeugs, die einen Schaltfinger (60) aufweist, der sich quer in Antriebsnussrillen von Schaltgabeln bewegt, um eine Gabel auszuwählen und sie axial gleiten zu lassen, einen Schaltverriegelungschlüssel (16), der Blockierblöcke (52, 54) aufweist, die in diesen Rillen justiert sind und den Schaltfinger umgeben, die ein axiales Gleiten einer anderen Gabel verhindern, wobei dieses Schaltgetriebe außerdem einen Rückwärtsgang aufweist, der durch Bewegen eines Schieberads umgesetzt wird, wobei das Einrücken des Rückwärtsgangs von einer Synchronisationsbewegung eines Vorwärtsgangs begleitet ist, um die Antriebswelle des Schaltgetriebes zu bremsen, **dadurch gekennzeichnet, dass** die Antriebsnuss (22) dieses Vorwärtsgangs eine Hakenform (70) auf einer Seite ihrer Rille aufweist, wobei die Spitze dieses Hakens in eine Vertiefung (62) eines Blockierblocks (52) bei der Synchronisation durch den Vorwärtsgang eindringt.

2. Vorrichtung nach Anspruch 1, **dadurch gekennzeichnet, dass** die Vertiefung (62) eine im Wesentlichen rechteckige Öffnung aufweist, in die sich die Spitze des Hakens (70) einpasst.

3. Vorrichtung nach Anspruch 2, **dadurch gekennzeichnet, dass** der Haken (70) durch Ausschneiden eines Blechs, das die Antriebsnuss (22) des Vorwärtsgangs bildet, ausgebildet ist.

4. Vorrichtung nach einem der vorhergehenden Ansprüche, **dadurch gekennzeichnet, dass** sie ferner einen Antriebsfinger (64) aufweist, der mit dem Schaltfinger (60) der Gänge verbunden ist, und eine Schaltklinke (38), die mit der Antriebsnuss (22) des Vorwärtsgangs verbunden ist, wobei der Antriebsfinger (64) die Schaltklinke (38) betätigen kann, um die Antriebswelle zu bremsen.

5. Vorrichtung nach einem der vorhergehenden Ansprüche, **dadurch gekennzeichnet, dass** sie vier Antriebsnussen aufweist, die überlagerte Platten aufweisen, wobei die erste Nuss (20) mit einer Schaltgabel (30) des ersten und des zweiten Gangs verbunden ist, wobei die zweite Nuss (22) mit einer Schaltgabel (32) des dritten und des vierten Gangs verbunden ist, wobei die dritte Nuss (24) mit einer Schaltgabel (34) eines fünften Gangs verbunden ist und die vierte Nuss (26) eine Schaltvorrichtung des Rückwärtsgangs (28) betätigt.

6. Vorrichtung nach Anspruch 5, **dadurch gekennzeichnet, dass** die Synchronisationsvorrichtung des vierten Gangs zum Bremsen der Antriebswelle verwendet wird.

7. Vorrichtung nach einem der vorhergehenden Ansprüche, **dadurch gekennzeichnet, dass** der Schaltfinger eine Gleitbewegung hat, um eine Auswahl auszuführen, und eine Drehbewegung, um ein Schalten auszuführen.
